# NEUE EUROPÄISCHE PATENTSCHRIFT

(11) **EP 2 139 675 B2**
(45) Veröffentlichungstag und Bekanntmachung des Hinweises auf die Entscheidung über den Einspruch: **18.06.2025**
(45) Hinweis auf die Patenterteilung: 29.11.2017
(21) Anmeldenummer: 07821104.2
(22) Anmeldetag: 10.10.2007
(51) Int. Cl.: F16C 33/20, F16C 33/28

(54) **WARTUNGSFREIES GLEITLAGER**
MAINTENANCE-FREE PLAIN BEARING
PALIER LISSE NE NÉCESSITANT PAS D'ENTRETIEN

(30) Priorität: 20.04.2007 DE 102007019200
(43) Veröffentlichungstag der Anmeldung: 06.01.2010
(73) Patentinhaber: Saint-Gobain Performance Plastics Pampus GmbH, 47877 Willich (DE)
(72) Erfinder: SCHMITJES, Olaf, 47807 Krefeld (DE); HELDMANN, Jörg, 52080 Aachen (DE)
(74) Vertreter: Zimmermann & Partner Patentanwälte mbB
(86) Internationale Anmeldenummer: PCT/EP2007/060736
(87) Internationale Veröffentlichungsnummer: WO 2008/128579

(56) Entgegenhaltungen:
- EP-A1- 0 394 518
- WO-A1-02/096644
- WO-A1-94/15999
- DE-A1- 102005 046 571
- DE-A1- 19 823 609
- US-B1- 6 726 994

## Beschreibung

Die Erfindung betrifft ein wartungsfreies Gleitlager, umfassend einen Metallträger, eine unmittelbar darauf aufgebrachte Zwischenschicht und eine auf die Zwischenschicht aufgebrachte Gleitschicht.
Wartungsfreie Gleitlager, die aus einem Schichtaufbau mit metallischem Trägermaterial, einer Zwischenschicht und einer darauf aufgebrachten Gleitschicht bestehen, sind aus dem Stand der Technik in vielfacher Weise seit Langem bekannt und kommen in den verschiedensten technischen Gebieten, beispielsweise im Bereich der Kraftfahrzeugtechnik, zum Einsatz.
In der EP 0 394 518 A1 ist ein Mehrschicht-Gleitlagermaterial beschrieben, bei dem das metallische Trägermaterial bevorzugt aus kaltgewalztem Stahl besteht, auf den als Zwischenschicht eine Schicht aus einem Copolymerisat aus Perfluoralkylvinylether und Tetrafluorethylen aufgebracht ist. Auf die Zwischenschicht wiederum ist eine Gleitschicht aus einem PTFE-Compound-Material aufgebracht. Bei diesem Gleitlagermaterial hat die Zwischenschicht die Funktion, eine feste Haftung der Gleitschicht auf dem Trägermaterial zu vermitteln. Um zunächst die Haftung der Zwischenschicht auf dem Trägermaterial zu gewährleisten, muss bei diesem bekannten Gleitlagermaterial die Oberfläche des metallischen Trägermaterials in geeigneter Weise nasschemisch vorbehandelt werden. Die mit Abstand besten Ergebnisse lassen sich hierbei durch Chromatieren der Oberfläche des metallischen Trägers erzielen. Dieses Verfahren ist jedoch aus Gründen des Umweltschutzes als bedenklich einzustufen und ist daher mittelfristig zu ersetzen.

Ausgehend von diesem Stand der Technik liegt der Erfindung die Aufgabe zugrunde, ein wartungsfreies Gleitlager, umfassend einen Metallträger, eine unmittelbar darauf aufgebrachte Zwischenschicht und eine auf die Zwischenschicht aufgebrachte Gleitschicht, anzugeben, bei dem eine exzellente Haftung der Gleitschicht auf dem Trägermaterial dauerhaft gewährleistet ist, und dessen Herstellung ohne den Einsatz ökologisch bedenklicher Verfahren zur Oberflächenvorbehandlung auskommt.

Die Aufgabe wird erfindungsgemäß mit einem wartungsfreien Gleitlager nach dem Patentanspruch 1 gelöst.

Die funktionellen Gruppen können in das thermoplastische Polymer (A) durch Zugabe von mindestens einem Modifizierungsagenz (B) eingebaut werden. Geeignete Modifizierungsagenzien sind beispielsweise Maleinsäure und ihre Derivate, insbesondere ihr Anhydrid, Itaconsäure und ihre Derivate, insbesondere ihr Anhydrid und/oder Citraconsäure und ihre Derivate, insbesondere ihr Anhydrid. Dabei beträgt das Verhältnis zwischen dem Polymer (A) und dem Modifizierungsagenz (B) vorzugsweise 99,9 Mol-% (A) zu 0,1 Mol-% (B) bis 80 Mol-% (A) zu 20 Mol-% (B). Die Schmelze-Volumenfließrate (MVR bei 50°C > als Schmelzpunkt und unter einer Last von 7 kg) liegt in der Größenordnung von 0,1 bis 1000 mm³/sec. Die MVR ist dabei ein Index für den Schmelzfluß des Polymers und kann somit als grobe Abschätzung für das Molekulargewicht herangezogen werden. Idealerweise liegt der MVR in der Größenordnung von 5-500 mm³/sec, besonders bevorzugt zwischen 10 und 200 mm³/sec.

Das erfindungsgemäße Gleitlager zeichnet sich durch eine hervorragende Haftung der Gleitschicht auf dem Trägermaterial vermittelt durch die erfindungsgemäß als funktionalisiertes thermoplastisches Polymer mit funktionellen Gruppen der vorstehend genannten Art ausgebildete Zwischenschicht aus. Infolge der exzellenten Haftung auch auf unvorbehandelter Oberfläche des Metallträgers, insbesondere auf kaltgewalztem Stahl, kaltgewalztem und nachträglich galvanisch verzinktem Stahl, Aluminium oder Edelstahl, können ökologisch bedenkliche und entsorgungsintensive nasschemische Vorbehandlungsverfahren, insbesondere Chromatieren, entfallen. Auch physikalische Verfahren zur Oberflächenvorbehandlung (z.B. eine Plasmavorbehandlung durch Koronaentladung), wie sie beispielsweise in der EP 0 848 031 B1, in der ebenfalls bereits ein funktionalisiertes thermoplastisches Fluorpolymer als Bestandteil eines Laminats beschrieben ist, erwähnt werden, sind nicht mehr erforderlich, wie Untersuchungen der Anmelderin gezeigt haben. Somit kann das Verfahren zur Herstellung des erfindungsgemäßen Gleitlagers zu im Vergleich zum Stand der Technik wesentlich geringeren Kosten erfolgen.

Das wenigstens eine funktionalisierte thermoplastische Polymer der Zwischenschicht ist ein funktionalisiertes thermoplastisches Fluorpolymer, nämlich Ethylen-Tetrafluorethylen-Copolymer (ETFE).

Bevorzugt enthält die Zwischenschicht neben dem wenigstens einen funktionalisierten thermoplastischen Polymer zusätzlich ein Copolymerisat aus Perfluoralkylvinylether der Formel:

CF₂=CF-O-R₁,

worin R₁ einen Perfluorethyl-, Perfluor-n-propyl oder Perfluor-n-butyl-Rest bedeutet, und Tetrafluorethylen.

Die Dicke der Zwischenschicht entspricht im wesentlichen der Rauheit des Metallträgers, definiert als Abstand Rₘₐₓ zwischen maximaler Profilkuppenhöhe und maximaler Profiltaltiefe des Rauheitsprofils der Oberfläche des Metallträgers. Hierdurch ist einerseits gewährleistet, dass eine hinreichend Dicke Klebeschicht auf den Metallträger aufgetragen ist, so dass eine vollflächige Klebeverbindung zwischen Gleitschicht und Metallträger sichergestellt ist. Andererseits ist die Klebeschicht auch nicht zu dick gewählt. In diesem Falle bestünde nämlich die Gefahr, dass bei der Verbindung der Schichten Teile der Klebeschicht aus dem Klebeverbund herausgepresst würden oder es innerhalb von das Rauheitsprofil der Metallträgeroberfläche überragenden Klebeschichtanteilen bei Scherbelastung des Gleitlagers zu Kohäsionsbrüchen käme.

Nach einer besonders vorteilhaften Lehre der Erfindung ist vorgesehen, dass die Zwischenschicht (2), wie im Patentanspruch 1 geschrieben, zwei Lagen des funktionalisierten thermoplastischen Polymers umfasst, wobei zwischen die zwei Lagen eine metallische Zwischenlage eingebettet ist. Hierdurch wird eine verbesserte Kalibrierfähigkeit des Materials erreicht werden. Hierbei kann die metallische Zwischenlage als Streckmetall ausgebildet sein. Bevorzugt besteht sie aus rostfreiem Stahl, Aluminium oder Bronze.

Zur Verbesserung der mechanischen und allgemein physikalischen Eigenschaften des Gleitlagers enthält die Zwischenschicht bevorzugt Füllstoffe zur Verstärkung und/oder Verbesserung der Wärmeleitfähigkeit und/oder der Verschleißeigenschaften. Als Füllstoffe werden bevorzugt Fasern, insbesondere Glasfasern, Kohlenstofffasern oder Aramide, anorganische Werkstoffe, insbesondere keramische Werkstoffe, Kohle, Glas, Graphit, Aluminiumoxid, Molybdänsulfid, Bronze oder Siliziumcarbid, alle anorganischen Werkstoffe in Form von Geweben, Pulvern, Kugeln oder Fasern, thermoplastische Werkstoffe, insbesondere Polyimid (PI), Polyamidimid (PAI), Polyphenylensulfid (PPS), Polyphenylensulfon (PPSO2), Flüssigkristallpolymere (LCP), Polyetheretherketone (PEEK) oder aromatische Polyester (Ekonol), oder mineralische Werkstoffe, insbesondere Wollastonit oder Bariumsulfat, oder Gemische daraus eingesetzt. Der bevorzugte Füllstoffanteil in der Zwischenschicht liegt dabei zwischen 1 - 40 Vol-%, insbesondere 5 - 30 Vol-%. Die Dicke der Zwischenschicht liegt bevorzugt zwischen 0,01 und 0,1 mm, insbesondere 0,01 und 0,05 mm,

Der in dem erfindungsgemäßen Gleitlager zum Einsatz kommende Metallträger kann bezüglich seiner Oberfläche unterschiedlich beschaffen sein. Aufgrund der exzellenten Haftungseigenschaften der das funktionalisierte thermoplastische Polymer enthaltenden Zwischenschicht kann der Metallträger eine glatte Oberfläche ebenso wie eine aufgerauhte oder eine strukturierte Oberfläche (beispielsweise durch Bürsten, Sandstrahlen, Einprägen einer Struktur) aufweisen. Unabhängig von der Oberflächenrauhigkeit kann es sich ferner um eine oberflächenveredelte, insbesondere galvanisch verzinkte, Oberfläche handeln.

Hinsichtlich des verwendeten Werkstoffes kann der Metallträger aus Stahl, insbesondere kaltgewalztem Stahl, bevorzugt der Werkstoffnummer 1.0338 oder 1.0347 oder matt verzinktem Stahl, Edelstahl, vorzugsweise der Werkstoff-Nr. 1.4512 oder 1.4720, oder Aluminium oder Legierungen daraus bestehen.

Die auf die Zwischenschicht aufgebrachte Gleitschicht ihrerseits enthält bevorzugt ein Fluorpolymer, insbesondere Polytetrafluorethylen, Polyamid, Polyetheretherketon (PEEK) oder ein Gemisch daraus. Besonders bevorzugt wird eine Gleitschicht, die als PTFE-Compound-Schicht ausgebildet ist. Dabei kann die Gleitschicht als gelochte Kunststofffolie zur Erhöhung der Leitfähigkeit ausgebildet sein.

Das erfindungsgemäße wartungsfreie Gleitlager weist exzellente Gleiteigenschaften bei hoher Lebensdauer auf, wenn die Dicke der Gleitschicht 0,01 - 1,5 mm, insbesondere 0,1 - 0,35 mm beträgt. Die auf die Zwischenschicht aufgebrachte Gleitschicht kann ihrerseits auch Füllstoffe zur Verstärkung und/oder Verbesserung der Wärmegleitfähigkeit und/oder der Verschleißeigenschaften enthalten. Bevorzugt sind dies Fasern, insbesondere Glasfasern, Kohlenstofffasern oder Aramide, anorganische Werkstoffe, insbesondere keramische Werkstoffe, Kohle, Glas, Graphit, Aluminiumoxid, Molybdänsulfid, Bronze oder Siliziumcarbid, alle anorganischen Werkstoffe in Form von Geweben, Pulvern, Kugeln oder Fasern, thermoplastische Werkstoffe, insbesondere Polyimid (PI), Polyamidimid (PAI), Polyphenylensulfid (PPS), Polyphenylensulfon (PPSO2), Flüssigkristallpolymere (LCP), Polyetheretherketone (PEEK) oder aromatische Polyester (Ekonol), oder mineralische Werkstoffe, insbesondere Wollastonit oder Bariumsulfat, oder Gemische daraus. Bevorzugt beträgt der Füllstoffanteil in der Gleitschicht 1 - 40 Vol-%, insbesondere 5 - 30 Vol-%.

Verfahrensmäßig wird die eingangs genannte Aufgabe durch ein Verfahren zur Herstellung eines wartungsfreien Gleitlagers nach einem der Ansprüche 1 - 21 dadurch gelöst, dass die Zwischenschicht und die Gleitschicht flächig, unter Druck und Wärmezufuhr mit dem Träger verbunden werden.

Bei diesem Verfahren werden sowohl der Metallträger als auch die Zwischenschicht und die Gleitschicht jeweils als Endlosmaterial von einer Rolle abgerollt und in einem Laminierwalzenaufbau unter Druck und Temperatur miteinander verbunden. Um eine weiter verbesserte Haftung der Zwischenschicht auf dem Metallträger bei gleichzeitig verbesserten Korrosionseigenschaften des Metallträgers zu erreichen, ist nach einer bevorzugten Ausgestaltung des erfindungsgemäßen Verfahrens vorgesehen, dass die Oberfläche des Metallträgers vor dem Aufbringen der Zwischenschicht aufgerauht und/oder oberflächenveredelt (z.B. durch galvanisches Verzinken) wird. Ferner kann die Oberfläche des Metallträgers auch durch mechanische Strukturierung, beispielsweise Bürsten, Sandstrahlen, Einprägen einer Struktur, vergrößert werden, was sich durch die Möglichkeit einer Verzahnung positiv auf die resultierenden Bindungskräfte auswirkt.

Im Folgenden wird die Erfindung anhand einer ein Ausführungsbeispiel darstellenden Zeichnung näher erläutert. Es zeigen:
- Fig. 1: ein erfindungsgemäßes Gleitlager in schematisierter Schnittansicht und
- Fig. 2: ein Diagramm zur Darstellung experimenteller Ergebnisse von Haftfestigkeitsuntersuchungen nach DIN 1895 an erfindungsgemäßen Gleitlagern.

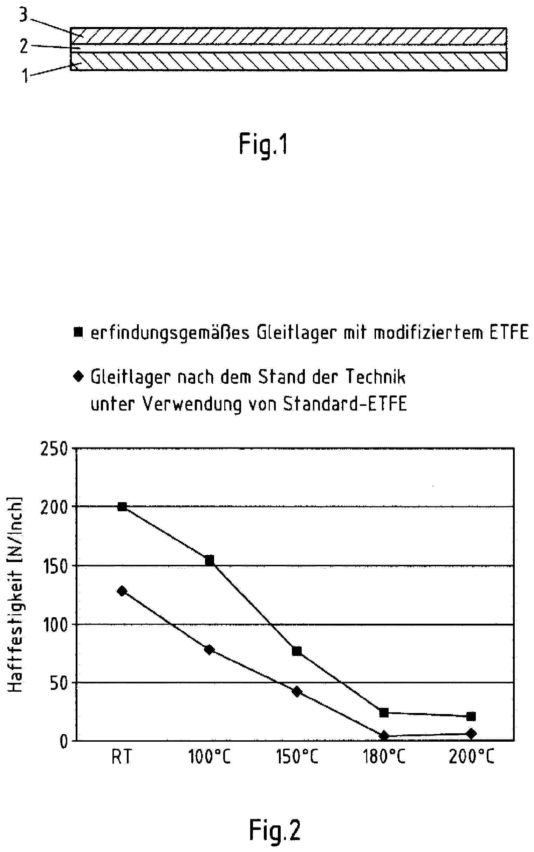

Der Aufbau des erfindungsgemäßen wartungsfreien Gleitlagers ist in Fig. 1 dargestellt. Hierbei ist der Metallträger mit 1 bezeichnet, während 2 die Zwischenschicht und 3 die darauf aufgebrachte Gleitschicht bezeichnet.

Erfindungsgemäß enthält die Zwischenschicht 2 ein wenigstens ein funktionalisiertes thermoplastisches Polymer wie in Anspruch 1 definiert. Die funktionellen Gruppen können in das thermoplastische Polymer (A) durch Zugabe von mindestens einem Modifizierungsagenz (B) eingebaut werden. Geeignete Modifizierungsagenzien sind beispielsweise Maleinsäure und ihre Derivate, insbesondere ihr Anhydrid, Itaconsäure und ihre Derivate, insbesondere ihr Anhydrid, und/oder Citraconsäure und ihre Derivate, insbesondere ihr Anhydrid. Dabei beträgt das Verhältnis zwischen dem Polymer (A) und dem Modifizierungsagenz (B) vorzugsweise 99,9 Mol-% (A) zu 0,1 Mol-% (B) bis 80 Mol-% (A) zu 20 Mol-% (B).

Die auf die Zwischenschicht 2 aufgebrachte Gleitschicht 3 ist vorliegend als PTFE-Compoundtape, insbesondere als oberflächenvorbehandeltes, bevorzugt geätztes, PTFE-Compoundtape, ausgebildet. Die verwendete PTFE-Compoundschicht 3 kann zur Verbesserung der mechanischen Eigenschaften verschiedene Füllstoffe enthalten, z.B. Fasern, insbesondere Glasfasern, Kohlenstofffasern oder Aramide, anorganische Werkstoffe, insbesondere keramische Werkstoffe, Kohle, Glas, Graphit, Aluminiumoxid, Molybdänsulfid, Bronze oder Siliziumcarbid, alle anorganischen Werkstoffe in Form von Geweben, Pulvern, Kugeln oder Fasern, thermoplastische Werkstoffe, insbesondere Polyimid (PI), Polyamidimid (PAI), Polyphenylensulfid (PPS), Polyphenylensulfon (PPSO2), Flüssigkristallpolymere (LCP), Polyetheretherketone (PEEK) oder aromatische Polyester (Ekonol), oder mineralische Werkstoffe, insbesondere Wollastonit oder Bariumsulfat, oder Gemische daraus.

Die bei dem erfindungsgemäßen Gleitlager erzielte verbesserte Haftfestigkeit wurde mittels eines 180°-Peel-Tests anhand von Sandwichlaminaten ermittelt. Zu diesem Zweck wurden Proben mit einem Fünfschichtaufbau hergestellt, wobei die zentrale Schicht durch den metallischen Träger 1 gebildet ist, auf den beidseitig die Zwischenschicht 2 aufgebracht ist, auf der wiederum eine äußere Gleitschicht 3 aufgebracht ist. Im Einzelnen wurde als Material für die Zwischenschicht 2 ein funktionalisiertes ETFE, bei dem metallischen Träger 1 kaltgewalzter Stahl der Qualität 1.0338 und als Gleitschicht 3 ein PTFE-Compoundtape mit einem Füllstoffzusatz von 25% ausgewählt.

Die Proben werden nach Herstellung des Sandwiches in Streifen der Breite 25 mm geschnitten und anschließend einem 180°-Peel-Test nach DIN 1895 zur Ermittlung von Zugfestigkeiten unterzogen.

Wie die in Fig. 2 dargestellten experimentellen Ergebnisse zeigen, lassen sich beim Einsatz eines funktionalisierten ETFE im Vergleich zu Standard-ETFE insbesondere bei Raumtemperatur deutliche Verbesserungen der Haftfestigkeit erzielen, wobei diese Verbesserung auch bei hohen Temperaturen noch vorhanden ist. Wie weitere Untersuchungen der Anmelderin gezeigt haben, lassen sich je nach Materialzusammensetzung durch die Funktionalisierung der Fluorpolymerschicht Steigerungen der Haftfestigkeit bis zu ca. 800% erzielen.

## Patentansprüche

1. Wartungsfreies Gleitlager, umfassend einen Metallträger (1), eine unmittelbar darauf aufgebrachte Zwischenschicht (2) und eine auf die Zwischenschicht (2) aufgebrachte Gleitschicht (3),
**dadurch gekennzeichnet, dass**
die Zwischenschicht (2) wenigstens ein funktionalisiertes thermoplastisches Fluorpolymer mit funktionellen Gruppen der Formel -COOH und/oder -COOR enthält, wobei R zyklische oder lineare organische Reste mit 1 bis 20 Kohlenstoffatomen beschreibt-,
wobei das funktionalisierte thermoplastische Fluorpolymer Ethylen-Tetrafluorethylen-Copolymer (ETFE) ist.

2. Gleitlager nach Anspruch 1, **dadurch gekennzeichnet, dass** die wenigstens ein funktionalisiertes thermoplastisches Fluorpolymer enthaltende Zwischenschicht (2) zusätzlich ein Copolymerisat aus Perfluoralkylvinylether der Formel:
CF₂=CF-O-R₁,
worin R₁ einen Perfluorethyl-, Perfluor-n-propyl oder Perfluor-n-butyl-Rest bedeutet, und Tetrafluorethylen enthält.

3. Gleitlager nach einem der Ansprüche 1 bis 2, **dadurch gekennzeichnet, dass** die Dicke der Zwischenschicht (2) im wesentlichen der Rauheit des Metallträgers (1), definiert als Abstand zwischen maximaler Profilkuppenhöhe und maximaler Profiltaltiefe des Rauheitsprofils der Oberfläche des Metallträgers (1), entspricht.

4. Gleitlager nach einem der Ansprüche 1 bis 2, **dadurch gekennzeichnet, dass** die Zwischenschicht (2) zwei Lagen des funktionalisierten thermoplastischen Fluorpolymers mit funktionellen Gruppen der Formel -COOH und/oder -COOR umfasst, wobei zwischen die zwei Lagen eine metallische Zwischenlage eingebettet ist.

5. Gleitlager nach Anspruch 4, **dadurch gekennzeichnet, dass** die metallische Zwischenlage als Streckmetall ausgebildet ist.

6. Gleitlager nach Anspruch 4 oder 5, **dadurch gekennzeichnet, dass** die metallische Zwischenlage aus rostfreiem Stahl, Aluminium oder Bronze besteht.

7. Gleitlager nach einem der Ansprüche 1 bis 6, **dadurch gekennzeichnet, dass** die Zwischenschicht (2) Füllstoffe zur Verstärkung und/oder Verbesserung der Wärmeleitfähigkeit und/oder der Verschleißeigenschaften enthält.

8. Gleitlager nach einem der Anspruch 7, **dadurch gekennzeichnet, dass** der Füllstoffanteil 1 bis 40 Vol.% beträgt.

9. Gleitlager nach einem der Ansprüche 1 bis 8, **dadurch gekennzeichnet, dass** die Zwischenschicht (2) eine Dicke von 0,01 bis 0,1 mm aufweist.

10. Gleitlager nach einem der Ansprüche 1 bis 9, **dadurch gekennzeichnet, dass** der Metallträger (1) eine glatte Oberfläche hat.

11. Gleitlager nach einem der Ansprüche 1 bis 9, **dadurch gekennzeichnet, dass** der Metallträger (1) eine aufgeraute Oberfläche hat.

12. Gleitlager nach einem der Ansprüche 1 bis 11, **dadurch gekennzeichnet, dass** der Metallträger (1) eine oberflächenveredelte Oberfläche hat.

13. Gleitlager gemäß einem der Ansprüche 1 bis 12, **dadurch gekennzeichnet, dass** der Metallträger (1) aus Stahl, oder Aluminium oder Legierungen daraus besteht.

14. Gleitlager nach einem der Ansprüche 1 bis 13, **dadurch gekennzeichnet, dass** die auf die Zwischenschicht (2) aufgebrachte Gleitschicht (3) Polytetrafluorethylen, Polyamid, Polyetheretherketon oder ein Gemisch daraus enthält.

15. Gleitlager nach Anspruch 14, **dadurch gekennzeichnet, dass** die Gleitschicht (3) als PTFE-Compound-Schicht ausgebildet ist.

16. Gleitlager gemäß einem der Ansprüche 1 bis 15, **dadurch gekennzeichnet, dass** die Gleitschicht (3) als gelochte und/oder luftdurchlässige Kunststofffolie ausgebildet ist.

17. Gleitlager nach einem der Ansprüche 1 bis 16, **dadurch gekennzeichnet, dass** die Gleitschicht (3) eine Dicke von 0,01 bis 1,5 mm aufweist.

18. Gleitlager gemäß einem der Ansprüche 1 bis 17, **dadurch gekennzeichnet, dass** die Gleitschicht (3) Füllstoffe zur Verstärkung und/oder Verbesserung der Wärmeleitfähigkeit und/oder der Verschleißeigenschaften enthält.

19. Gleitlager gemäß Anspruch 18, **dadurch gekennzeichnet, dass** der Füllstoffanteil 1 bis 40 Vol-% beträgt.

20. Verfahren zur Herstellung eines wartungsfreien Gleitlagers gemäß einem der Ansprüche 1 bis 19 **dadurch gekennzeichnet, dass** die Zwischenschicht (2) und die Gleitschicht (3) flächig, unter Druck und Wärmezufuhr mit dem Metallträger (1) verbunden werden.

21. Verfahren gemäß Anspruch 20, **dadurch gekennzeichnet, dass** die Oberfläche des Metallträgers (1) vor dem Aufbringen der Zwischenschicht (2) aufgeraut und/oder oberflächenveredelt wird.

## Claims

1. Maintenance-free slide bearing comprising a metal support (1), an intermediate layer (2) applied directly to the metal support, and a sliding layer (3) applied to the intermediate layer (2),
**characterized in that**
the intermediate layer (2) contains at least one functionalized thermoplastic fluoropolymer which has functional groups of the formula -COOH and/or -COOR, where R describes cyclic or linear organic groups which have 1 to 20 carbon atoms,
wherein the functionalized thermoplastic fluoropolymer is ethylene-tetrafluoroethylene copolymer (ETFE).

2. Slide bearing according to claim 1, **characterized in that** the intermediate layer (2) containing at least one functionalized thermoplastic fluoropolymer additionally contains a copolymer of perfluoroalkyl vinyl ether of the formula:
CF₂=CF-O-R₁,
where R₁ is a perfluoroethyl-, perfluoro-n-propyl or perfluoro-n-butyl group, and contains tetrafluoroethylene.

3. Slide bearing according to either of claims 1 to 2, **characterized in that** the thickness of the intermediate layer (2) is substantially equal to the roughness of the metal support (1), defined as the distance between the maximum profile peak height and the maximum profile valley depth of the roughness profile of the surface of the metal support (1).

4. Slide bearing according to either of claims 1 to 2, **characterized in that** the intermediate layer (2) comprises two layers of the functionalized thermoplastic fluoropolymer which has functional groups of the formula -COOH and/or -COOR, wherein a metal intermediate layer is embedded between the two layers.

5. Slide bearing according to claim 4, **characterized in that** the metal intermediate layer is designed as expanded metal.

6. Slide bearing according to claim 4 or claim 5, **characterized in that** the metal intermediate layer consists of stainless steel, aluminum or bronze.

7. Slide bearing according to any of claims 1 to 6, **characterized in that** the intermediate layer (2) contains fillers for reinforcing and/or improving the thermal conductivity and/or the wear properties.

8. Slide bearing according to any of claim 7, **characterized in that** the filler content is 1 to 40 vol.%.

9. Slide bearing according to any of claims 1 to 8, **characterized in that** the intermediate layer (2) has a thickness of 0.01 to 0.1 mm.

10. Slide bearing according to any of claims 1 to 9, **characterized in that** the metal support (1) has a smooth surface.

11. Slide bearing according to any of claims 1 to 9, **characterized in that** the metal support (1) has a roughened surface.

12. Slide bearing according to any of claims 1 to 11, **characterized in that** the metal support (1) has a surface-finished surface.

13. Slide bearing according to any of claims 1 to 12, **characterized in that** the metal support (1) consists of steel, or aluminum or alloys thereof.

14. Slide bearing according to any of claims 1 to 13, **characterized in that** the sliding layer (3) applied to the intermediate layer (2) contains polytetrafluoroethylene, polyamide, polyetheretherketone or a mixture thereof.

15. Slide bearing according to claim 14, **characterized in that** the sliding layer (3) is designed as a PTFE compound layer.

16. Slide bearing according to any of claims 1 to 15, **characterized in that** the sliding layer (3) is designed as a perforated and/or air-permeable plastics film.

17. Slide bearing according to any of claims 1 to 16, **characterized in that** the sliding layer (3) has a thickness of 0.01 to 1.5 mm.

18. Slide bearing according to any of claims 1 to 17, **characterized in that** the sliding layer (3) contains fillers for reinforcing and/or improving the thermal conductivity and/or the wear properties.

19. Slide bearing according to claim 18, **characterized in that** the filler content is 1 to 40 vol.%.

20. Method for producing a maintenance-free slide bearing according to any of claims 1 to 19, **characterized in that** the intermediate layer (2) and the sliding layer (3) are connected to the metal support (1) over the surface of said layers, under pressure and with application of heat.

21. Method according to claim 20, **characterized in that** the surface of the metal support (1) is roughened and/or surface-finished before the interlayer (2) is applied.

## Revendications

1. Palier à glissement sans entretien, comprenant un support métallique (1), une couche intermédiaire (2) appliquée directement sur celui-ci et une couche de glissement (3) appliquée sur la couche intermédiaire (2),
**caractérisé en ce que**
la couche intermédiaire (2) contient au moins un fluoropolymère thermoplastique fonctionnalisé comportant des groupes fonctionnels de formule - COOH et/ou -COOR, où R représente des radicaux organiques cycliques ou linéaires comportant 1 à 20 atomes de carbone,
dans lequel le fluoropolymère thermoplastique fonctionnalisé est un copolymère d'éthylène-tétrafluoroéthylène (ETFE).

2. Palier de glissement selon la revendication 1, **caractérisé en ce que** la couche intermédiaire (2) contenant au moins un fluoropolymère thermoplastique fonctionnalisé contient en outre un copolymère de perfluoroalkylvinyléther de formule :
CF₂=CF-O-R₁,
où R₁ représente un radical perfluoroéthyle, perfluor-n-propyle ou perfluor-n-butyle, et du tétrafluoroéthylène.

3. Palier de glissement selon l'une des revendications 1 à 2,
**caractérisé en ce que** l'épaisseur de la couche intermédiaire (2) correspond sensiblement à la rugosité du support métallique (1) et est définie comme étant la distance entre une hauteur de sommet de profilé maximale et une profondeur de fond de profilé maximale du profilé de rugosité de la surface du support métallique (1).

4. Palier de glissement selon l'une des revendications 1 à 2,
**caractérisé en ce que** la couche intermédiaire (2) comprend deux couches de fluoropolymère thermoplastique fonctionnalisé comportant des groupes fonctionnels de formule -COOH et/ou -COOR, dans lequel une couche intermédiaire métallique est intercalée entre les deux couches.

5. Palier de glissement selon la revendication 4, **caractérisé en ce que** la couche intermédiaire métallique est réalisée sous forme de métal déployé.

6. Palier de glissement selon la revendication 4 ou 5,
**caractérisé en ce que** la couche intermédiaire métallique se compose d'acier inoxydable, d'aluminium ou de bronze.

7. Palier de glissement selon l'une des revendications 1 à 6,
**caractérisé en ce que** la couche intermédiaire (2) contient une matière de charge permettant de renforcer et/ou d'améliorer la conductivité thermique et/ou les propriétés d'usure.

8. Palier de glissement selon l'une des revendications 7, **caractérisé en ce que** la proportion de matière de charge va de 1 à 40 % en volume.

9. Palier de glissement selon l'une des revendications 1 à 8,
**caractérisé en ce que** la couche intermédiaire (2) présente une épaisseur allant de 0,01 à 0,1 mm.

10. Palier de glissement selon l'une des revendications 1 à 9,
**caractérisé en ce que** le support métallique (1) possède une surface lisse.

11. Palier de glissement selon l'une des revendications 1 à 9,
**caractérisé en ce que** le support métallique (1) possède une surface rugueuse.

12. Palier de glissement selon l'une des revendications 1 à 11,
**caractérisé en ce que** le support métallique (1) possède une surface traitée en surface.

13. Palier de glissement selon l'une des revendications 1 à 12,
**caractérisé en ce que** le support métallique (1) se compose d'acier, ou d'aluminium ou d'alliages de ceux-ci.

14. Palier de glissement selon l'une des revendications 1 à 13,
**caractérisé en ce que** la couche de glissement (3) appliquée sur la couche intermédiaire (2) contient du polytétrafluoroéthylène, polyamide, polyétheréthercétone ou un mélange de ceux-ci.

15. Palier de glissement selon la revendication 14, **caractérisé en ce que** la couche de glissement (3) est réalisée sous forme de couche de composé PTFE.

16. Palier de glissement selon l'une des revendications 1 à 15,
**caractérisé en ce que** la couche de glissement (3) est réalisée sous forme de film en matière plastique perforé et/ou perméable à l'air.

17. Palier de glissement selon l'une des revendications 1 à 16,
**caractérisé en ce que** la couche de glissement (3) présente une épaisseur allant de 0,01 à 1,5 mm.

18. Palier de glissement selon l'une des revendications 1 à 17,
**caractérisé en ce que** la couche de glissement (3) contient une matière de charge permettant de renforcer et/ou d'améliorer la conductivité thermique et/ou les propriétés d'usure.

19. Palier de glissement selon la revendication 18, **caractérisé en ce que** la proportion de matière de charge va de 1 à 40 % en volume.

20. Procédé de fabrication d'un palier de glissement sans entretien selon l'une des revendications 1 à 19, **caractérisé en ce que** la couche intermédiaire (2) et la couche de glissement (3) sont reliées à plat, sous pression et avec apport de chaleur au support métallique (1).

21. Procédé selon la revendication 20, **caractérisé en ce que** la surface du support métallique (1) est rendue rugueuse et/ou traitée en surface avant l'application de la couche intermédiaire (2).
